# EUROPEAN PATENT SPECIFICATION

(11) **EP 3 571 360 B1**
(45) Date of publication and mention of the grant of the patent: **25.03.2026**
(21) Application number: 18702153.0
(22) Date of filing: 18.01.2018
(51) Int. Cl.: E04B 1/94, A62C 3/10, E21D 11/15, A62C 3/02, A62C 2/06, C09K 21/02, C04B 28/04, C04B 28/34, C04B 30/02, C04B 111/12, C04B 111/28, C04B 28/24

(54) **FIRE PROTECTION BOARDS AND STRUCTURES PROTECTED BY SUCH BOARDS**
BRANDSCHUTZPLATTEN UND DURCH SOLCHE PLATTEN GESCHÜTZTE STRUKTUREN
PANNEAUX DE PROTECTION CONTRE L'INCENDIE ET STRUCTURES PROTÉGÉES PAR DE TELS PANNEAUX

(30) Priority: 20.01.2017 GB 201700969
(43) Date of publication of application: 27.11.2019
(73) Proprietor: Thermal Ceramics De France, 42160 Andrézieux-Bouthéon (FR)
(72) Inventor: FREEMAN, Craig, Bromborough Wirral CH62 3PH (GB)
(74) Representative: Greenwoods
(86) International application number: PCT/EP2018/051252
(87) International publication number: WO 2018/134328

(56) References cited:
- CN-B- 101 344 006
- GB-A- 2 525 440
- US-A1- 2011 126 957
- US-A1- 2014 212 619
- US-A1- 2014 378 596
- UNIFRAX LTD: "Isofrax Moist PakTM", 1 May 2012 (2012-05-01), XP055463842, Retrieved from the Internet <URL:http://www.unifrax.eu.com/web/Audit.nsf/ByUNID/2A1CA4DFD3126D078525825F002EDF1F/$File/Isofrax%20Moist%20Pak%20EN.pdf> [retrieved on 20180329]
- UNIFRAX LTD: "Insulfrax Bulk and Chopped Fibres", 1 January 2009 (2009-01-01), XP055457915, Retrieved from the Internet <URL:http://www.unifrax.eu.com/web/Audit.nsf/ByUNID/0246974ACFA96FE78525824B002E4DBC/$File/Insulfrax%20Bulk%20&%20Chopped%20Fibres%20EN.pdf> [retrieved on 20180309]

## Description

This invention relates to a self-supporting board for use in fire protection.

The invention is particularly, although not exclusively, applicable to materials used for passive fire protection in tunnels.

Fires in tunnels are difficult to control and can be devastating. The confined nature of tunnels limits escape of heat, and the tunnels can act as flues, driving a fire to high temperatures than would be seen in an open air fire. Although tunnels typically provide refuges and escape routes for persons using the tunnels, these require protection from fire, and this protection can sometimes fail. A prolonged fire can also cause damage to the structure of a tunnel requiring major engineering work to remedy. Even relatively small fires can cause damage to electrical services in a tunnel.

For these reasons modern tunnel design (and in many countries, by regulation) require the use of both passive and active fire protection systems.

Passive fire protection systems typically provide a lining of refractory material sufficient to delay the progress of a fire and provide insulation to critical parts of the tunnel.

Tests for fitness of materials used for tunnel fire protection measure resistance for a specified time (typically 2 hours) against exposure to a specified heating regime (fire curve).

For example, for protection of reinforced concrete, the Rijkswaterstaat (RWS) (Dutch regulations) fire curve uses a temperature curve that:
- ramps up rapidly to over 1150°C after 5 minutes;
- to 1200°C at 10 minutes;
- reaches 1300°C at 30 minutes;
- 1350°C at 60 minutes;
- cools down through 1300°C at 90 minutes
- to 1200°C at 120 minutes (and is maintained at this temperature for longer if a longer duration is specified for the test).

The requirement for passing the test is that the temperature of the reinforcement in the concrete behind the fire protection should not exceed 250°C, and the interface between the fire protection and the concrete should not exceed 380°C. Temperature measurement is by thermocouples embedded in the concrete and at the concrete face nearest the source of heat. A similar test, the Modified Hydrocarbon (HCM) fire curve reaches 1300°C at 30 minutes and maintains this temperature until the end of the test at 120 minutes.

Such passive fire protection systems include:
- Cements - which are typically, sprayed, cast or trowelled to surfaces requiring fire protection.
- Boards - which are mounted to surfaces requiring fire protection, either directly abutting the surfaces or spaced from the surfaces.

Boards used in tunnel fire protection include:-

### Calcium silicate boards.

These comprise calcium silicate and optionally binders and refractory fillers. One such board comprises calcium silicate with an alumina filler and has: a quoted density of ~900kg.m⁻³; reported thermal conductivity ~0.212 W.m⁻¹.K⁻¹ at 20°C; and is available in thicknesses of 25-40mm. Typically, to pass a two hour test under the RWS fire curve such boards need to be of the order of 25mm or more thickness.

### Cement boards

Such boards comprise cements using light weight aggregates such as perlite or expanded glass granulate and optionally comprise glass fibres as reinforcement. One such board has: a quoted density of ~690-980kg.m⁻³; reported thermal conductivity ~0.175 W.m⁻¹.K⁻¹ (assumed to be at ambient); and is available in thicknesses of 20-60mm. Typically, to pass a two hour test under the RWS fire curve such boards need to be of the order of 35mm or more thickness.

### Magnesia boards

These are rigid fire protection panels made from magnesium oxide with silicates and other additives, and finished with a fibreglass mesh. One range of such boards have: a quoted density of ~650-700kg.m⁻³; reported thermal conductivity ~0.19 - 0.27 W.m⁻¹.K⁻¹ (assumed to be at ambient); and is available in thicknesses of 8-40mm. Typically, to pass a two hour test under the RWS fire curve such boards need to be of the order of 30mm or more thickness.

Problems inherent to calcium silicate, cement, and magnesia boards include-
- their density, which can make them difficult to handle and secure in place;
- dustiness in machining during installation;,
- the hydrophilic alkaline nature of calcium silicates, which as a dust can be unpleasant to skin/eyes.

US2014/0212619 discloses to panels comprising a metal facing and an insulating foam layer with a fire barrier layer is placed between the foam and metal facing. The fire barrier layer comprises a polymer matrix with additives that can include porous silica, silica microspheres, and glass fibre.

GB2525440 A discloses a castable refractory material for use in the manufacture of refractory products to be used in aluminium production and refining processes. The refractory comprises fused silica, ceramic fibre, micro silica and a bonding material comprising colloidal silica.

US2011/126957 A1 discloses flexible fire protection materials comprising alkaline earth silicate fibres with a diameter <2µm.
Unifrax Ltd, "Isofrax Moist PakTM" (http://www.unifrax.eu.com/web/Audit.nsf/ByUNID/2A1CA4DFD3126D078525825F002EDF1 F/$File/Isofrax%20Moist%20Pak%20EN.pdf)
discloses alkaline earth silicate fibres comprising 70.0-80.0 SiO₂ and >18.0 - 27.0 MgO.
Unifrax Ltd, "Insulfrax Bulk and Chopped Fibres (http://www.unifrax.eu.com/web/Audit.nsf/ByUNID/0246974ACFA96FE78525824B002E4DB C/$File/Insulfrax%20Bulk%20&%20Chopped%20Fibres%20EN.pdf)
discloses fibres comprising 61.0-67.0 SiO₂, 27.0-33.0 CaO and 2.5-6.5% MgO

### Summary of the Invention

As set out in the appended claims, the invention provides a self-supporting board for use in fire protection, characterised in that the board is formed from material comprising in wt%:

| | |
|---|---|
| low biopersistence inorganic fibres comprising alkaline earth silicate fibres, alkaline earth aluminates, alkali metal aluminosilicates, or other fibres that have a weighted half life of <40days when measured by the intratracheal installation test method ECB/TM/27 rev.7 | 45-55% |
| amorphous silica | 40-50% |
| binder | 0-5% |

the board having a density in the range 350 to 790 kg/m³.

The invention further comprises a structure comprising a plurality of such boards mounted thereto.

The self-supporting boards of the present invention provide excellent fire protection whilst maintaining a low unit weight, whilst having sufficient mechanical strength. The low weight of the boards combined with the low shrinkage characteristics at high temperatures enables larger and thinner boards to be configured into a fire protection system, particular for applications covering large surface areas, such as lining road or rail tunnels.

To lower board density, the inorganic fibre content is preferably greater than 45wt%, more preferably greater than 48wt%, even more preferably greater than 50wt%. A higher fibre content enables a lower density board to be produced.

The silica content is at least 45wt% and more preferably greater than 50wt%. Silica contents lower than 30wt% are prone to producing boards with increased shrinkage at high temperatures.

The density of the board is between 350 and 790 kg/m³, more preferably between 375 and 740 kg/m³, even more preferably between 390 and 700 kg/m³ and yet even more preferably between 400 to 600 kg/m³. The shrinkage of the board at 1400°C for 24 hours is preferably less than 10%, more preferably less than 6%, even more preferably less than 5% and yet even more preferably less than 2%.

The thermal conductivity of the board at 1000°C is preferably less than 0.22 W/mk, more preferably less than 0.21 W/mk and even more preferably less than 0.20 W/mk.

Preferably the board passes the RWS test (120 minutes) and has a thickness of less than 25mm, more preferably less than 25mm and even more preferably less than 22mm. The minimum thickness of the board is preferably at least 18mm and more preferably at least 20mm.

Preferably the board passes the RWS test (180 minutes) and has a thickness of 30mm or less, more preferably less than 28mm and even more preferably less than 25mm. The minimum thickness of the board is preferably at least 20mm and more preferably at least 22mm.

The present invention is as further set out in the claims, and provides a self-supporting board for use in fire protection, the board being formed from a material comprising low biopersistence inorganic fibres, amorphous silica, and optionally binders in the amounts set out in the claims.

Further feature of the present disclosure are illustrated in the following non-limitative description in which:-
- Fig. 1: shows measured thermal conductivities of a range of boards in accordance with the present invention;
- Fig. 2: shows concrete surface temperature obtained using a 20mm thick board when exposed to the RWS fire curve;
- Fig. 3: shows concrete surface temperature obtained using a 30mm thick board when exposed to the RWS fire curve;
- Fig. 4: shows temperatures at 50mm below the concrete surface obtained using the 20mm board of Fig. 2 when exposed to the RWS fire curve; and
- Fig. 5: shows temperatures at 50mm below the concrete surface obtained using the 30mm board of Fig. 3 when exposed to the RWS fire curve.

### Components

In the present specification, the term **"low biopersistence inorganic fibres"** should be taken as encompassing alkaline earth silicate fibres, alkaline earth aluminates, alkali metal aluminosilicates, and other fibres that are readily cleared by the lung's physiological clearance mechanism.

A definition that can be applied is as meaning fibres that have a weighted half life of <40days when measured by the intratracheal installation test method ECB/TM/27 rev.7 [http://tsar.jrc.ec.europa.eu/documents/Testing-Methods/mmmfweb.pdf - April 1999].

**Alkaline earth silicate fibres** are generally formed from the melt and include, *inter alia,* magnesium silicate fibres, calcium magnesium silicate fibres, and calcium silicate fibres. Alkaline earth silicate fibres frequently comprise other components either as impurities or to achieve particular mechanical, thermal, or biological effects (e.g. iron oxides, alkali metal oxides, aluminium oxide, phosphorus oxides, and mixtures thereof).

**Alkali metal silicate fibres** are generally formed from the melt and include, inter alia, potassium aluminosilicate fibres such as disclosed in WO2008/065363, WO2009/066076 and WO2015/011439.

**Fine diameter low biopersistence fibres** (i.e. low biopersistence inorganic fibres with arithmetic mean diameter < 2µm) provide low thermal conductivity to a body of fibres by reducing the scope for conduction through the solid and permitting finer inter-fibre porosity, increasing the number of radiate-absorb steps for heat to pass by radiation from one side of the body to the other.

A commercially available alkaline earth silicate fibre SUPERWOOL^{®} PLUS, (made by proprietary technology) has a classification temperature of 1200°C (EN 1094-1) and has:-
• a typical composition comprising in weight percent

| | |
|---|---|
| SiO₂ | 64-66% |
| CaO | 27-31 |
| MgO | 4-7 |
| Al₂O₃ | <0.8 |
| Others (including Al₂O₃) | <1. |

"Other" in the above context means any other material and typically these comprise oxides although other materials (e.g. fluorides) may be present.
• fibre diameters in the range 2.5-3µm

Another commercially available alkaline earth silicate fibre for use at higher temperatures is SUPERWOOL^{®} HT (made by proprietary technology), which has a classification temperature of 1300°C (EN 1094-1) and has:-
• a typical composition comprising in weight percent

| | |
|---|---|
| SiO₂ | 73-74.5 wt% |
| CaO | 22.2-26 wt% |
| MgO | 0.4-0.8 wt% |
| Al₂O₃ | 0.9-1.4 wt% |
| K₂O | 0.5-0.8 wt% |

with any other components or impurities amounting to at most 0.3wt%.
• fibre diameters in the range 3-3.5µm arithmetic mean.

The applicant's co-pending applications GB2546310 and WO2017/121770 disclose processes for producing fibres of like composition to SUPERWOOL^{®} PLUS and SUPERWOOL^{®} HT with arithmetic mean diameters <2µm.

Typically, the higher the silica content of the fibres, the more refractory they are; but if too high biosolubility drops. Refractory alkaline earth silicate fibres that retain biosolubility typically have silica contents in the range 58% - 80% and may comprise >60% or >70% silica.

**Amorphous silica** is an amorphous (glassy) form of silica that can be made in a variety of ways, and includes, as examples, fused silica and fumed silica. The examples of the present disclosure have used fused silica, but the present invention is not restricted thereto. It should be noted that fused silica is less likely to form fine dust than fumed silica.

**Fused silica** is made by melting a high purity silica, solidifying the melt to form an amorphous mass, and crushing the amorphous mass into a powder.

In the examples given below the fused silica used was from Dupré Minerals, quality -120 Grade which is 99.8% SiO₂ and has a d10 6.06µm, d50 39.7µm and d90 124.5µm
Typical **inorganic binders** that might be used include, for example: colloidal silica, colloidal alumina, colloidal aluminosilicate, colloidal zirconia, aluminium chlorohydrate, phosphates, and mixtures therof.
In the examples given below the inorganic binder used was a colloidal silica
Köstrosol 1530 from CWK, with a 30% by weight solids content and a specific area of 185 m²·g⁻¹.

**Colloidal materials** comprise microscopically dispersed insoluble particles in another substance. In the present specification the term "colloidal" is to be understood as having a particle size less than 1µm.

Typical **organic binders** that might be used include, for example: starch and/or other polysaccharides, phenolic resins, and acrylics. In the examples given below the organic binder used comprised a starch, for instance HiCat 1164A grade from Roquette . It is preferable that if present, these binders be only present in low quantities [e.g. ≤5%, ≤4%, ≤3%, <2% or even ≤1%].

The **liquid phase** in a slurry or suspension usable in manufacture of the present products is typically water but other liquids may be used to choice.

### Processes

A method of making boards is the Fourdrinier process which uses a machine typically comprising a forming section, in which the suspension drains onto a mesh conveyor belt to form a wet web, and a drying section where the wet web is dried by heat Typically a press section may be provided between the forming section and the drying section, where the wet web is compressed to squeeze out fluid before the web passes to the drying section. A calendaring section may be provided after the drying section to smooth the board surface. The Fourdrinier process typically enables higher loadings of particulate materials to be provided than in vacuum forming (described below), but the present invention is not limited to materials made by the Fourdrinier process.

An alternative method used to form boards and other shaped products is by vacuum forming, in which a suspension of fibre with an organic binder and an inorganic binder is produced. The organic binder and inorganic binder flocculate, drawing the fibre into a flocculated suspension.

The suspension is placed in contact with mesh moulds and vacuum is applied to the moulds to vacuum form articles either on the outside of the mesh (male mould) or on the inside of the mesh (female mould). Vacuum is applied to the mould until a sufficient thickness of fibre has built up and the mould is then removed from the suspension, the vacuum remaining on for a little while to promote dewatering. This process produces a wet green article containing about 50%-70% water.

At this stage the product is normally fragile having the consistency of wet cardboard. The wet green article is dried, for example at a temperature of about 150°C and the organic binder then gives handling strength.

Alternative methods, for example pressing or casting, are not precluded by this disclosure, but generally preparing a slurry or suspension and removing the liquid phase is convenient.

### Examples

### Shrinkage and thermal conductivity

Boards of approximately 800mm x 300mm were made from a suspension to produce the materials of the thicknesses and properties set out in Table 1 at the end of this description.

In Table 1, "Alkaline earth silicate fibres A" are SUPERWOOL^{®}HT fibres as described above with an arithmetic average fibre diameter in the range 2.5-3 µm and a shot content in the range 45-50% by weight: and "Alkaline earth silicate fibres B" are fibres of like composition with an arithmetic average fibre diameter <2µm and having a shot content in the range 30-35% by weight

Shrinkage of the boards were measured after exposure to 1400°C for 24 hours (i.e to temperatures well above the RWS and HCM fire curves and for significantly longer). Measurement comprised placing platinum pins (approximately 0.4-0.5mm diameter) 100 x 55mm apart The longest lengths (L1 & L2) and the diagonals (L3 & L4) were measured to an accuracy of ±5µm using a travelling microscope. The samples were placed in a furnace and ramped to a temperature 50°C below the test temperature at 300°C/hour and ramped at 120°C/hour for the last 50°C to test temperature and left for 24 hours. The samples were allowed to cool in the furnace before removal. The shrinkage values are given as an average of the 4 measurements.

Thermal conductivities were measured by ASTM-C201.

As can be seen, the boards with 20% fused silica show high shrinkage at 1400°C (over 5%) whereas those with 30% and 45% fused silica show significantly lower shrinkage with 45% fused silica having the lowest shrinkage.

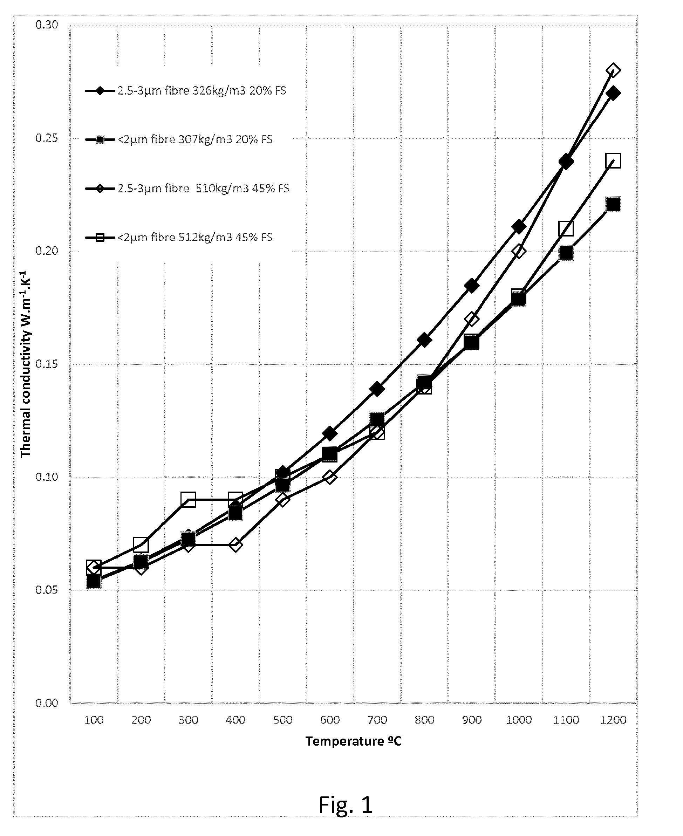

In addition, as can be seen plotted in Fig. 1, the thermal conductivities of the boards comprising fibres with arithmetic average fibre diameter <2µm [□] is significantly lower than the boards with arithmetic average fibre diameter in the range 2.5-3µm [◈]. All of the examples for which thermal conductivity has been measured show comparable or better thermal conductivities than those reported for calcium silicate boards, cement boards and magnesia boards; and at a significantly lower density.

Lower density of the boards means a lower loading on fastenings used to secure the boards in a tunnel, this can significantly affect the type and number of fastenings used to secure the boards to the tunnel, benefitting both material costs and installation costs.

However the invention is applicable to higher density boards too, and a 20mm thick board made with 60% fused silica had a density of 730kg.m⁻³ and a 24 hour linear shrinkage at 1400ºC of 1.2%. As the strength of the boards tends to increase with fused silica content, such refractory boards can have application where refractoriness and structural integrity is a requirement. A typical application might be as back up insulation for refractories in iron and steel making.

### Fire test

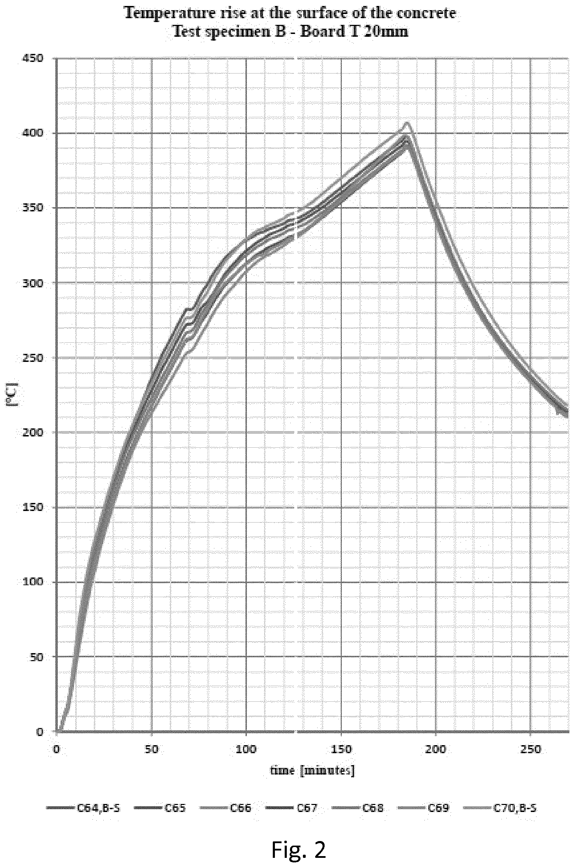

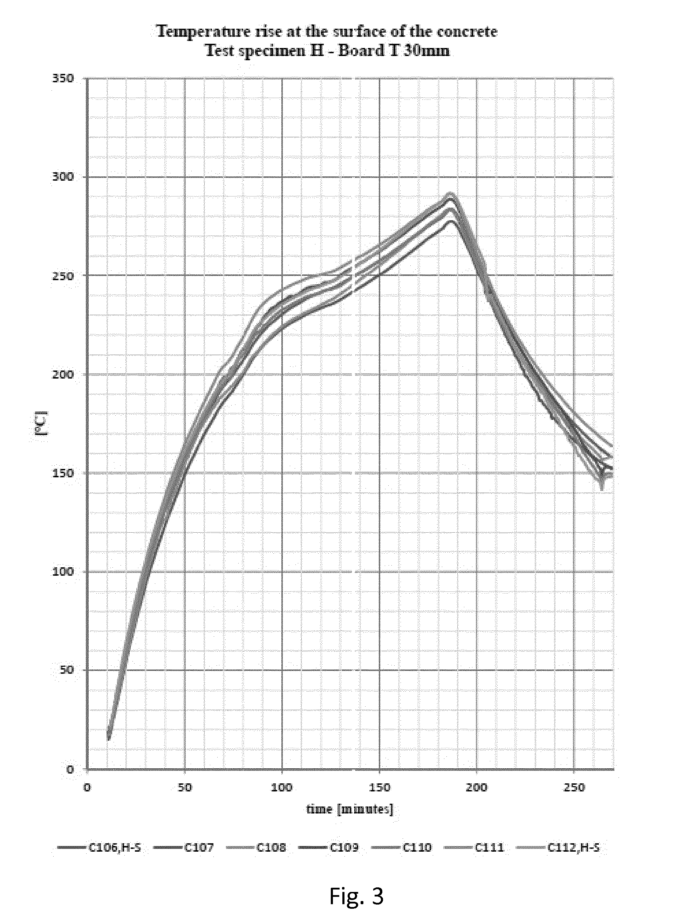

Sample boards comprising 45% fused silica were tested for ability to withstand the RWS fire curve over a three hour timescale. Figs. 2 and 3 show the concrete surface temperatures experienced by a number of thermocouples positioned across a tested board and respectively show the results for a 20mm thick board and a 30mm thick board. As can be seen the results shown in Fig,.2 for a 20mm thick board show that it does not reach 380°C after 120 minutes and so passes a two hour RWS test. This board is nearly good enough to pass a three hour RWS test As shown in Fig. 3, a 30mm thick board comfortably passes a three hour RWS test and looks capable of resisting such a fire for considerably longer.

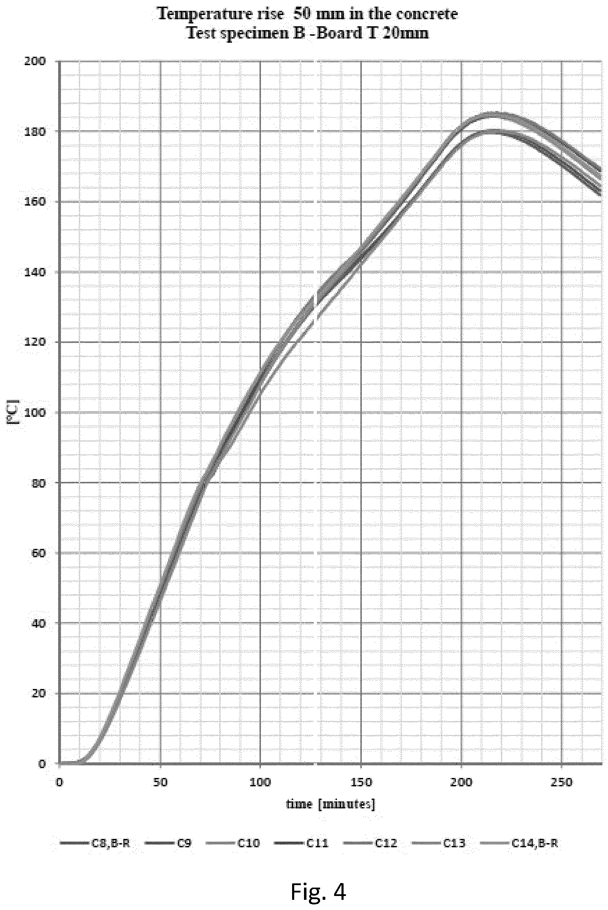

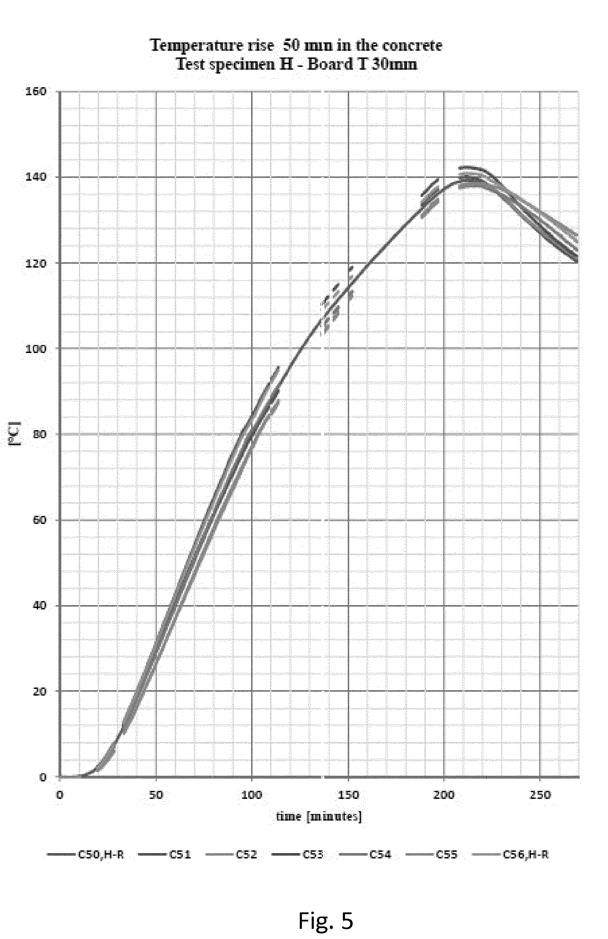

Similarly Figs. 4 and 5 show the temperatures experienced at 50mm below the concrete surface and in both cases, neither reaches the 250°C limit for reinforcement called for in the RWS test.

Accordingly the present disclosure describes boards that can pass a 2 hour RWS test at thicknesses as low as about 20mm, and a 3 hour RWS test at thicknesses between about 20mm and 30mm. This, in combination with the lower density of such boards, enables a given requirement for fire protection to be met with a lighter structure than conventional tunnel fire protection boards: or permits a given weight of structure to provide fire protection for much longer than conventional tunnel fire protection boards.

The low shrinkage of the present materials at 1400°C and the above results for an RWS test indicates that these boards will meet tests using the HCM fire curve.

The table below summarises the commercially available board (Promat, Fermacell - Aestuver and Mercor) with the boards of the present invention. Different boards were used for each of the RWS120 and RWS 180 tests. The results confirm that the boards of the present invention are significantly lighter.

| TEST | PROMAT | AESTUVER Tx | MERCOR Tecbor B | Present Invention |
|---|---|---|---|---|
| **RWS 120** | Pass | Pass | Pass | Pass |
| Thickness | 25 to 27.5mm | 20mm+10mm* | 24mm | 20mm |
| Density (kg/m³) | 945-975 | 966 | 925 | 470 - 512 |
| **RWS 180** | - | Pass | Pass | Pass |
| Thickness | - | 30mm | 40mm | 30mm |
| Density (kg/m³) | - | 853 | 925 | 470 - 512 |

### Notes:

Aestuver Tx for RWS 120min require 20mm board+10mm air gap with backing strips. Boards are attached after concrete tunnel walls/roof are constructed.

Comparative boards are attached to concrete with a minimum strength category of C25/C35.

Boards of the present invention attached to concrete with a minimum strength category of C35/C45.

| | |
|---|---|
| PROMAT test certificate: | Exova CF 647 Promatect T (25mm board) |
| | 1. Exova CF 548 Promatect H (27.5mm board) |
| AESTUVER Tx test certificate: | 2014-Efectis R 0160 (RWS 120 and 180) |
| MERCOR Tecbor B test certificate: | 2015-Efectis - R000911 (RWS 120) |
| | 2011-Efectis-R0280 (RWS 180) |

The above describes self-supporting boards for use in fire protection.

The boards may further comprise facing material or support material providing additional erosion resistance, decoration, or mechanical support to the boards.

The present invention does not preclude other materials being present in the boards, for example:-
- Hydrophobic materials to limit water absorption in use;
- Biocides to limit attack of organic components and/or to limit colonisation by lichens;
- Endothermic materials.

The present disclosure contemplates the use of organic, inorganic, or a combination of organic and inorganic binders, but preferably the amount of organic binder is kept low to reduce any heat/flame contribution from combustion in the event of fire.

It should be noted that the higher the level of fused silica, the better the mechanical properties. The examples using 45% fused silica had sufficient strength to allow cutting and fixing without difficulty, whereas those with lower levels of fused silica required greater care in fixing.

Although the above has mentioned applicability to fire protection in tunnels, the boards of the present application are also usable for fire protection in other applications, for example: for ductwork, for structural steelwork; and in marine applications to protect structural and other features in ships. The boards are also usable in other applications than for fire protection for their refractory and insulating properties.

| Table 1 | Comparative Example | Comparative Example | | Comparative Example | Comparative Example | Comparative Example | |
|---|---|---|---|---|---|---|---|
| Reference | 0420 | 0388 | 0404 | 0419 | 0389 | 0390 | 0408 |
| Board thickness mm | 25 | 35 | 35 | 25 | 20 | 35 | 35 |
| Target density kg/m³ | 330 | 420 | 550 | 330 | 420 | 420 | 550 |

| Components | | | | | | | |
|---|---|---|---|---|---|---|---|
| Alkaline earth silicate fibres A | 75.3 | 65.3 | 50.3 | | | | |
| Alkaline earth silicate fibres B | | | | 75.3 | 65.3 | 65.3 | 50.3 |
| Fused silica | 20 | 30 | 45 | 20 | 30 | 30 | 45 |
| Binder - 3.5% polysaccharide, balance colloidal silica | 4.7 | 4.7 | 4.7 | 4.7 | 4.7 | 4.7 | 4.7 |

| **Properties** | | | | | | | |
|---|---|---|---|---|---|---|---|
| Shrinkage @ 1400°C/24hrs | 6.3 | 1.4 | 1.2 | 10.5 | 4.1 | 3.4 | 0.8 |
| Measured density Kg/m³ | 326.0 | | 507.2 | 316.0 | | | 511.5 |
| Calculated Thermal Conductivity (W/mk) | | | | | | | |
| Temp °C | | | | | | | |
| 100 | 0.05 | Not measured | 0.06 | 0.05 | Not measured | Not measured | 0.06 |
| 200 | 0.06 | | 0.06 | 0.06 | | | 0.07 |
| 300 | 0.07 | | 0.07 | 0.07 | | | 0.09 |
| 400 | 0.09 | | 0.07 | 0.08 | | | 0.09 |
| 500 | 0.10 | | 0.09 | 0.10 | | | 0.10 |
| 600 | 0.12 | | 0.10 | 0.11 | | | 0.11 |
| 700 | 0.14 | | 0.12 | 0.13 | | | 0.12 |
| 800 | 0.16 | | 0.14 | 0.14 | | | 0.14 |
| 900 | 0.18 | | 0.17 | 0.16 | | | 0.16 |
| 1000 | 0.21 | | 0.20 | 0.18 | | | 0.18 |
| 1100 | 0.24 | | 0.24 | 0.20 | | | 0.21 |
| 1200 | 0.27 | | 0.28 | 0.22 | | | 0.24 |

## Claims

1. A self supporting board for use in fire protection, **characterised in that** the board is formed from material comprising in wt%:
| | |
|---|---|
| low biopersistence inorganic fibres comprising alkaline earth silicate fibres, alkaline earth aluminates, alkali metal aluminosilicates, or other fibres that have a weighted half life of <40days when measured by the intratracheal installation test method ECB/TM/27 rev.7 | 45-55% |
| amorphous silica | 40-50% |
| binder | 0-5% |
the board having a density in the range 350 to 790 kg/m³.

2. A self-supporting board for use in fire protection as claimed in Claim 1, in which the alkaline earth silicate fibres have an arithmetic mean diameter <2µm.

3. A self-supporting board for use in fire protection as claimed in Claim 2, in which the alkaline earth silicate fibre has a composition comprising >70wt% SiO₂.

4. A self-supporting board for use in fire protection as claimed in any of Claims 2 to 3, in which the alkaline earth silicate fibre has a composition comprising
>20wt% CaO
with CaO + SiO₂ >90wt%, >95wt% or > 98wt%.

5. A self-supporting board for use in fire protection as claimed in any of Claims 1 to 4, having a density between 400 and 600kg.m⁻³.

6. A self-supporting board for use in fire protection as claimed in any of Claims 1 to 5, in which the binder comprises an inorganic binder, optionally in combination with an organic binder.

7. A self-supporting board for use in fire protection as claimed in any of Claims 1 to 6, in which the amount of binder is in the range 0.5 - 5% by weight of the material.

8. A self-supporting board for use in fire protection as claimed in any of Claims 1 to 7, in which the amount of any organic binder present is less than 3% by weight of the material.

9. A self-supporting board for use in fire protection as claimed in any of claims 1 to 8, wherein the board:
has a shrinkage at 1400°C (24hrs) of less than 5%; and
passes the RWS test (120min and/or 180min).

10. A self-supporting board for use in fire protection comprising a self-supporting board as claimed in any of Claims 1 to 9, further comprising facing material on at least one face of the self-supporting board.

11. A structure comprising a plurality of self-supporting boards mounted thereto, the self-supporting boards comprising boards as claimed in any of Claims 1 to 10.

12. A structure as claimed in Claim 11, in which the structure is a tunnel.

13. A structure as claimed in Claim 11, in which the structure is a ship.

## Patentansprüche

1. Eine selbsttragende Platte für den Brandschutz, **gekennzeichnet dadurch, dass** die Platte aus Material besteht, das aus Gewichtsprozent besteht:
| | |
|---|---|
| Anorganische Fasern mit niedriger Biopersistenz, bestehend aus erdalischen Silikatfasern, Erdalkali-Aluminaten, Alkalimetall-Aluminosilikaten oder anderen Fasern, deren Halbwertszeit bei der Messung der intratrachealen Installationstestmethode ECB/TM/27 rev.7 eine gewichtete Halbwertszeit von <40 Tagen ist. | 45-55% |
| amorphes Siliziumdioxid | 40-50% |
| Ordner | 0-5% |
die Platine hat eine Dichte im Bereich von 350 bis 790 kg/m³.

2. Eine selbsttragende Platte für den Einsatz im Brandschutz, wie in Anspruch 1 behauptet, bei der die alkalischen Erd-Silikatfasern einen arithmetischen mittleren Durchmesser <2 µm haben.

3. Eine selbsttragende Platte für den Brandschutz, wie in Anspruch 2 behauptet, bei der die alkalische Erdilikatfaser eine Zusammensetzung von >70 Wt% SiO 2 aufweist.

4. Eine selbsttragende Platte für den Einsatz im Brandschutz, wie in jeder der Ansprüche 2 bis 3 behauptet, bei der die alkalische Erde Silikatfaser eine Zusammensetzung besitzt, die aus
>20 Wt% CaO
mit CaO + SiO2 >90 Gewicht, >95 Gewichtsprozent oder > 98 Gewichtsprozent.

5. Ein selbsttragendes Board für den Einsatz im Brandschutz, wie es in jedem der Ansprüche beansprucht wird 1 zu 4, mit einer Dichte zwischen 400 und 600 kg.m⁻³.

6. Ein selbsttragendes Board für den Einsatz im Brandschutz, wie es in jedem der Ansprüche beansprucht wird 1 zu 5, wobei das Bindemittel aus einem anorganischen Bindemittel besteht, optional in Kombination mit einem organischen Bindemittel.

7. Ein selbsttragendes Board für den Einsatz im Brandschutz, wie es in jedem der Ansprüche beansprucht wird 1 zu 6, wobei die Menge des Bindemittels im Bereich von 0,5 - 5 % nach Gewicht des Materials liegt.

8. Ein selbsttragendes Board für den Einsatz im Brandschutz, wie es in jedem der Ansprüche beansprucht wird 1 zu 7, wobei die Menge eines beliebigen organischen Bindemittels weniger als 3 % des Gewichts des Materials beträgt.

9. Ein selbsttragendes Board für den Einsatz im Brandschutz, wie in jedem der Ansprüche 1 bis 8 beansprucht, wobei das Board:
hat eine Schrumpfung bei 1400°C (24 Stunden) von weniger als 5 %; und
besteht den RWS-Test (120 Minuten und/oder 180 Min).

10. Eine selbsttragende Tafel für den Einsatz im Brandschutz bestehend aus einem selbsttragenden Gremium wie in jedem der Claims behauptet 1 zu 9, weitere Zusammenfassung das Material auf mindestens einer Seite des selbsttragenden Bretts zu zeigen.

11. Eine Struktur, die aus mehreren selbsttragenden Brettern besteht, die darauf montiert sind; die selbsttragenden Bretter bestehen aus Brettern, wie sie in jedem der Ansprüche beansprucht werden 1 zu 10.

12. Eine Struktur, wie in Anspruch 11 behauptet, bei der die Struktur ein Tunnel ist.

13. Eine Struktur, wie in Anspruch 11 behauptet, bei der die Struktur ein Schiff ist.

## Revendications

1. Un panneau autoportant destiné à la protection incendie, **caractérisé par le fait que** le panneau est formé à partir de matériaux composés en % de poids :
| | |
|---|---|
| fibres inorganiques à faible biopersistance comprenant des fibres de silicate alcalino-terreux, des aluminates alcalino-médiophores, des aluminosilicates de métaux alcalins ou d'autres fibres ayant une demivie pondérée de <40 jours mesurée par la méthode d'essai d'installation intratrachéale ECB/TM/27 rev.7 | 45-55% |
| Silice amorphe | 40-50% |
| classeur | 0-5% |
la planche a une densité comprise entre 350 et 790 kg/m3.

2. Un panneau autoportant destiné à la protection contre l'incendie comme affirmé dans la revendication 1, dans lequel les fibres de silicate alcalino-terreuses ont un diamètre arithmétique moyen <2µm.

3. Un panneau autoportant destiné à la protection incendie comme affirmé dans la revendication 2, dans lequel la fibre de silicate alcalino-terreuse a une composition composée de >70 % de_{SiO 2}.

4. Un panneau autoportant destiné à la protection contre l'incendie, comme revendiqué dans l'une des revendications 2 à 3, dans laquelle la fibre alcalino-solue-silicate a une composition comprenant
>20 % de CaO
avec CaO + SiO2 >90 % en poids %, > 95 % en poids ou > 98 % en poids.

5. Un panneau autoportant pour une utilisation en protection incendie telle que revendiquée dans l'une des réclamations 1 à 4, avec une densité comprise entre 400 et 600 kg.m⁻³.

6. Un panneau autoportant pour une utilisation en protection incendie telle que revendiquée dans l'une des réclamations 1 à 5, dans lequel le liant comprend un liant inorganique, éventuellement en combinaison avec un liant organique.

7. Un panneau autoportant pour une utilisation en protection incendie telle que revendiquée dans l'une des réclamations 1 à 6, dans laquelle la quantité de liant est comprise entre 0,5 et 5 % en poids du matériau.

8. Un panneau autoportant pour une utilisation en protection incendie telle que revendiquée dans l'une des réclamations 1 à 7, dans laquelle la quantité de tout liant organique présent est inférieure à 3 % en poids du matériau.

9. Un conseil autoportant pour une utilisation en protection incendie telle que revendiquée dans l'une des réclamations 1 à 8, dans laquelle le conseil :
a un retrait de 1400°C (24 heures) inférieur à 5 % ; et
réussit le test RWS (120 min et/ou 180 min).

10. Un panneau autoportant destiné à la protection contre l'incendie composant un conseil autonome tel que revendiqué dans l'une des réclamations 1 à 9, comprenant également matériau de revêtement sur au moins une face de la planche autoportante.

11. Une structure composée d'une pluralité de panneaux autoportant montés à cela, les conseils autoportant comprenant des panneaux tels que revendiqués dans des réclamations 1 à 10.

12. Une structure telle que revendiquée dans la réclamation 11, dans laquelle la structure est un tunnel.

13. Une structure telle que revendiquée dans la réclamation 11, dans laquelle la structure est un navire.
